# EUROPÄISCHE PATENTANMELDUNG

(11) **EP 0 841 508 A2**
(43) Veröffentlichungstag der Anmeldung: **13.05.1998**
(21) Anmeldenummer: 97119320.6
(22) Anmeldetag: 05.11.1997
(51) Int. Cl.: F16J 15/46

(54) **Blähdichtring**

(30) Priorität: 07.11.1996 DE 19645904
(71) Anmelder: Umformtechnik Hausach GmbH, D-77756 Hausach (DE)
(72) Erfinder: Klammer, Hans-Peter, 77756 Hausach (DE)
(74) Vertreter: Patentanwälte Westphal, Buchner, Mussgnug Neunert, Göhring

(57) **Zusammenfassung**

Blähdichtring mit einer im wesentlichen torusförmigen Blähdichtung (1), die zwischen zwei abzudichtenden, konzentrisch positionierbaren Anschlüssen (2, 3) oder dergl. vorgesehen ist, die einen Befestigungsabschnitt (1a) aufweist, der über einen Rand (3a) eines der beiden Anschlüsse (3) gezogen ist, und die einen aufblasbaren Abschnitt (1b) besitzt, der radial wirkend zwischen beiden Anschlüssen (2, 3) angeordnet ist, sowie mit einer Hülle (4), die die Blähdichtung (1) zumindest im Bereich des aufblasbaren Abschnitts (1b) im wesentlichen vollständig ummantelt.

## Beschreibung

Die vorliegende Erfindung betrifft einen Blähdichtring gemäß Anspruch 1 sowie ein Verfahren zur Ausbildung eines solchen Blähdichtringes.

Blähdichtungen, auch in Form von Blähdichtringen, sind dem Grunde nach an sich seit langem bekannt.

Beispiele für Anwendungen im Kraftfahrzeugbereich sind in der DE 37 39 176 A1 oder der DE 37 28 181 A1 beschrieben. Die DE 37 39 176 A1 zeigt eine Dichtleiste für eine Kraftfahrzeugtür, die mittels eines U-förmigen Klemmteils an einem Rand bzw. Flansch der Kraftfahrzeugkarosserie im Bereich der Türöffnung befestigt ist. Die Blähdichtung besitzt weiterhin ein schlauchförmiges Dichtteil, das aus Kunststoff oder Gummi besteht und durch zugeführte Druckluft aufgebläht und in dichtenden Kontakt mit der geschlossenen Kraftfahrzeugtür gebracht werden kann.

Eine ähnlich aufgebaute Dichtungsanordnung ist in der DE 37 29 181 beschrieben, die in Verbindung mit einem Schiebedach eines Kraftfahrzeugs verwendet wird. Die Blähdichtung ist mit einem Befestigungsabschnitt auf einen abgewinkelten Rand des Dachausschnittes aufgesteckt. Der schlauchförmige Dichtungsabschnitt ist gegen den Umfangrand des die Dachöffnung verschließenden, verschiebbaren Deckels gerichtet und kann zur Verbesserung der Dichtwirkung unter Druck gesetzt werden.

Diese aus elastisch nachgebendem Kunststoff oder Gummi gefertigten Blähdichtungen sind für die genannten Einsatzzwecke im Kraftfahrzeugbereich durchaus geeignet. Eine Verwendung in einer Umgebung, in der eine Berührung mit chemisch aggressiven Medien unvermeidbar ist, scheitert an der mangelnden Resistenz der Dichtungsmaterialien. Hierfür werden nach wie vor herkömmliche Dichtungselemente aus Elastomeren eingesetzt, die zum Schutz gegen aggressive Bestandteile mit chemisch resistenten Überzügen, beispielsweise aus PTFE versehen sind. Im Falle der aus der US 2,774,621 bekannten flexiblen Dichtung wird der aus Silikon oder vergleichbaren Materialien bestehende Dichtungskörper mit einer Schutzschicht aus PTFE, PVC oder ähnlichen Materialien durch Eintauchen in eine entsprechende Dispersion oder Lösung und anschließendes Aushärten beschichtet.

Bei der aus der US 4,915,355 bekannten Ventil-Dichtung wird ein O-Ring durch eine Umhüllung aus PTFE geschützt, die durch einen Klemmring in einer Nut fixiert ist, die auch den O-Ring aufnimmt.

Nachteilig bei den vorstehend genannten Dichtungselementen ist jedoch, daß diese durch ihre Ummantelung zwar gegenüber chemischen Einflüssen resistent sind, jedoch keine Deformation in dem Maße zulassen, wie dies bei Blähdichtungen gegeben ist.

Weiterhin ist es aus der GB 705,093 bekannt, im Fahrzeugbau Dichtungselemente zu verwenden, die eine Hohlkammer aufweisen und damit eine Deformation in größerem Umfang zulassen. Zum Schutz gegen insbesondere Hitzeeinwirkung ist das Dichtungselement mit einem Gewebe ummantelt, welches zusätzlich über den Rand eines fahrzeugseitigen Stegs gezogen und dort fixiert ist.

Eine spezielle Eignung dieser Konzeption für die Herstellung eines Blähdichtrings ist hieraus nicht ableitbar, da das Gewebe herstellungsbedingt Fadenzwischenräume aufweist, durch die Partikel der aggressiven Medien hindurchtreten und auf das Dichtungsmaterial einwirken können.

Schließlich ist aus der DE 44 40 895 C1 eine Kupplungsverbindung zwischen zwei Anschluß-Rohrstutzen bekannt, bei denen ein aufblasbarer Dichtungsring in einer umlaufenden Ringnut eines Anschlußflansches eingesetzt ist. Zum Schutz gegen aggressive Medien ist eine elastische Manschette vorgesehen, die den Flansch, und damit den eingelegten Dichtungsring, axial vollständig abdeckt. Diese Art der Abdichtung ist jedoch lediglich in axialer Richtung und im Zusammenhang mit der hier vorliegenden Flanschverbindung wirksam. Radiale Dichtkräfte lassen sich hierdurch nicht erzielen.

Der vorliegenden Erfindung lag deshalb die Aufgabe zugrunde, einen Blähdichtring zur Verfügung zu stellen, der zwischen zwei abzudichtenden, konzentrisch positionierbaren Anschlußstutzen oder dergleichen einsetzbar und somit radial wirkend ist, und durch eine Ummantelung gegenüber aggressiven Medien chemisch resistent ist. Auch soll der Blähdichtring konstruktiv einfach aufgebaut und damit kostengünstig herstellbar sein.

Diese Aufgabe wird durch einen Blähdichtring gelöst, der die Merkmale des Anspruchs 1 aufweist. Bevorzugte Ausführungsvarianten sind Gegenstand der hiervon abhängigen Ansprüche.

Die Aufgabe wird weiterhin durch ein Verfahren zur Ausbildung eines solches Blähdichtrings gelöst, wie es durch die Merkmale des Anspruchs 10 beschrieben ist. Eine vorteilhafte Verfahrensvariante ist Gegenstand des nachgeordneten Anspruchs.

Die Erfindung basiert auf der Idee, eine im wesentlichen torusförmige Blähdichtung vorzusehen, die zwischen zwei abzudichtenden, konzentrisch positionierbaren Anschlüssen vorgesehen ist. Die Blähdichtung besitzt einen Befestigungsabschnitt, der über einen Rand eines der beiden Anschlüsse gezogen ist, sowie einen aufblasbaren Abschnitt, der radial zwischen beiden Anschlüssen wirkt. Zumindest in diesem Bereich ist die Blähdichtung mit einer Hülle im wesentlichen vollständig ummantelt, so daß der angestrebte Schutz gegen aggressive Medien erreicht ist. Ein solcher Blähdichtring ist kostengünstig herzustellen und durch einfaches Aufstecken auf den Rand eines der beiden Anschlüsse zu montieren. Die Kombination aus Blähdichtung und Hülle wurde bislang nicht für praktisch realisierbar gehalten, da die hierfür geeigneten Materialien, insbesondere Polyterrafluorethylen (PTFE) im Zusammenhang mit Dichtungen lediglich als Beschichtungen von solchen Dichtungselementen bekannt waren, bei denen die Deformation vergleichsweise gering ausfiel. Eine Anwendung auf Blähdichtungen schien wegen des nicht ausreichenden Elastizitätvermögens nicht realisierbar. Die Lösung in Form einer die Blähdichtung im Bereich des aufblasbaren Abschnitts lose umfassenden Hülle stellt eine völlig neue Konzeption eines Blähdichtrings dar, die kein Vorbild im Stand der Technik hat.

Vorteilhafterweise ist die Hülle aus einem reckfähigen WeichPTFE gefertigt, so daß die Hülle ausgehend aus einem Flächengebilde, wie beispielsweise einem Tuch oder einer Folie, um die Blähdichtung herum gezogen und damit in die erforderliche Form gebracht werden kann.

Bevorzugt ist die Hülle aus einem kreisringförmigen Tuch gebildet, so daß die Ummantelung der torusförmigen Blähdichtung durch entsprechendes Recken möglich ist, ohne daß im Endzustand Schnittverluste anfallen. Auch entfällt die ansonsten übliche Nachbearbeitung durch Abschneiden nicht benötigter Abschnitte des Ausgangsmaterials.

Weitere Vorteile ergeben sich dann, wenn ein Spannring vorgesehen ist, der am Rand des Abschlusses fixiert ist. Der Spannring sichert diejenigen Bauteile des Blähdichtrings, die über den Rand des betreffenden Anschlusses gezogen sind, beispielsweise den Befestigungsabschnitt der Blähdichtung und/oder die Hülle, soweit diese ebenfalls über den Rand gezogen ist.

Im Falle der Ausgestaltung der Hülle in Form eines kreisringförmigen Tuchs kann der Aufbau des Blähdichtrings so gestaltet sein, daß das Tuch mit einem außenliegenden Randbereich über den Rand aufgespannt ist, die Blähdichtung darüberliegend auf den Rand aufgesetzt ist, wodurch der Randbereich des Tuchs festgeklemmt gehalten ist. Der ursprünglich innenliegende Randbereich des Tuchs ist über die Blähdichtung hinweg nach außen gezogen und über den Rand gespannt. Dieser Abschnitt hält damit die gesamte Konstruktion am Rand fest, wobei je nach Anwendungsfall eine zusätzliche Sicherungswirkung durch den Spannring erzielt werden kann.

Bevorzugt ist an der Blähdichtung ein Anschluß für Druckluft vorgesehen, so daß die in der Regel am Einsatzort ohnehin vorhandene Druckluft dazu benutzt werden kann, die Dichtwirkung rasch herzustellen. Auf den Einsatz zusätzlicher Luftpumpen oder dergleichen kann somit verzichtet werden.

Vorteilhafterweise wird der Druckluftanschluß in radialer Richtung in die Blähdichtung hineingeführt, wodurch sich eine gute Zugänglichkeit ergibt.

Besonders einfach läßt sich ein derartiger Blähdichtring dann herstellen, wenn als Hülle ein kreisringförmiges Tuch verwendet wird. Dieses Tuch wird über den Rand des Anschlusses gespannt und ist damit für die weitere Verarbeitung vorfixiert. Im Anschluß daran wird die Blähdichtung mit ihrem Befestigungsabschnitt über den Rand des Anschlusses gelegt bzw. aufgesteckt, so daß das kreisringförmige Tuch im innenliegenden Bereich etwas nach unten ausweicht. Anschließend wird der innen liegende Randbereich des Tuchs über die Blähdichtung hinweg herausgezogen und über den Rand gespannt. Damit ist der Blähdichtring zumindest im potentiellen Kontaktbereich mit den aggressiven Medien vollständig ummantelt und vor Zerstörung gesichert.

Je nach Anwendungszweck und mechanischer Beanspruchung können Hülle und Blähdichtung mit einem Spannring fixiert werden, der am Rand befestigt wird. Der Spannring kann so gestaltet sein, daß er axial von oben und radial von außen gegen den Randbereich des Anschlusses gezogen wird und damit die dazwischenliegenden Bestandteile des Blähdichtrings festhält.

Hinsichtlich weiterer Merkmale und Vorteile des erfindungsgemäßen Blähdichtringes bzw. des Verfahrens zur Ausbildung eines solchen Blähdichtringes wird auf die folgende Beschreibung Bezug genommen.

In den Zeichnungen zeigen:
- Fig. 1: eine Teil-Querschnittansicht eines erfindungsgemäßen Blähdichtringes, der zwischen zwei Behälteranschlüssen angeordnet ist; und
- Fig. 2: eine Teil-Querschnittansicht des Blähdichtringes nach der Figur 1, jedoch mit einem Druckluftanschluß.

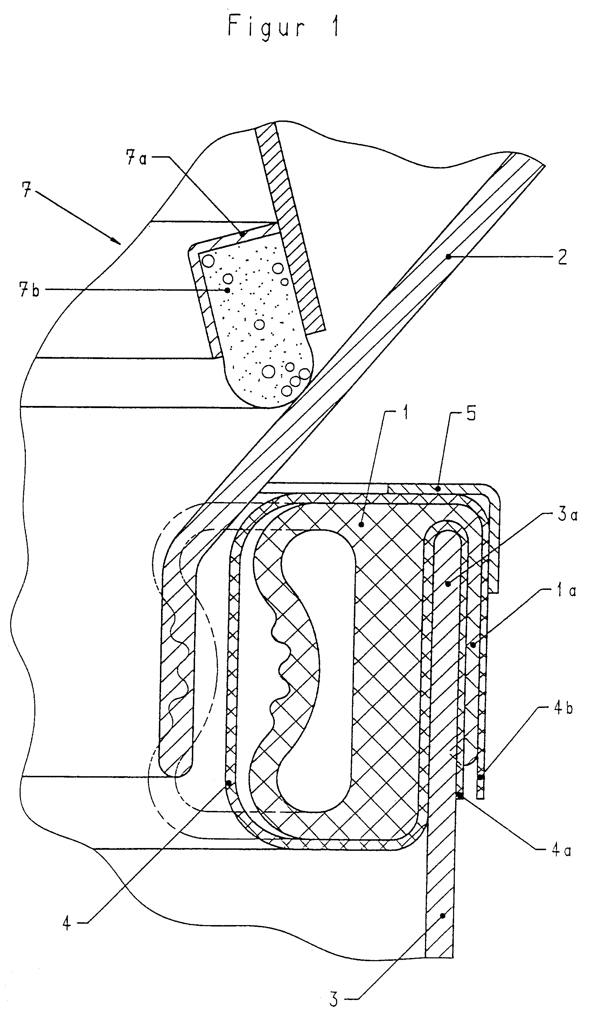

In der Fig. 1 ist mit dem Bezugszeichen 2 ein unterer Teil (Anschluß) eines Auslaufrichters eines Behälters für z. B. Schüttgut bezeichnet. Im unteren Teil der Figur 1 ist mit dem Bezugszeichen 3 der obere Rand eines Anschlusses einer korrespondierenden Entleerstation bezeichnet.

Im Falle einer Entleerung des Behälters für Schüttgut muß der Anschluß 2 über dem Anschluß 3 positioniert und anschließend abgesenkt werden. Die zentrische Einstellung des Anschlusses 2 des Behälters für Schüttgut relativ zum Anschluß 3 der Entleerstation erfolgt mittels eines geführten Absetzens des Auslauftrichters in die Fangschuhe (nicht dargestellt) der Entleerstation.

Um eine dichte, insbesondere staubdichte Abdichtung zwischen den beiden Anschlüssen 2 und 3 zu erreichen, ist zwischen diesen beiden konzentrisch positionierten Anschlüssen 2 und 3 bzw. deren Rändern 2a und 3a ein Blähdichtring angeordnet.

Zum Entleeren des Behälters für das Schüttgut wird ein innerhalb des Auslauftrichters dargestellter Verschlußkegel 7 angehoben. Der Verschlußkegel 7 umfaßt hierbei einen Dichtungshaltering 7a sowie eine Dichtung 7b.

Der Blähdichtring nach der vorliegenden Erfindung ist im wesentlichen zwischen den beiden Anschlüssen 2 und 3, und insbesondere zwischen deren Rändern 2a und 3a radial wirkend angeordnet.

Der in der dargestellten Ausführungsform gezeigte Blähdichtring ist mit einer Hülle 4 aus Weich-PTFE (Teflon) versehen. Eine solche Umhüllung schützt die Blähdichtung 1, die bevorzugt aus Silikon gefertigt ist, vor aggressiven Medien.

Ausgehend von einer Folie oder einem Tuch aus Weich-PTFE wird die Hülle 4, die kreisringförmig mit beispielsweise einem Außendurchmesser von 745mm und einem Innendurchmesser von 15mm vorliegt, mit dem außenliegenden Randbereich 4a über den oberen Rand 3a des Anschlusses 3 gezogen. Nach dem Aufziehen der Hülle 4 wird die Blähdichtung 1 auf den Rand 3a aufgesteckt, so daß ein radial außenliegender Abschnitt 1a der Blähdichtung 1 auf der Außenseite des Randes 3a des Anschlusses 3 angeordnet ist und der äußere Randbereich 4a der Hülle 4 zwischen dem Rand 3a und dem Abschnitt 1a liegt bzw. geklemmt ist.

Anschließend wird der Innendurchmesser der Hülle 4 auf ca. 485mm aufgeweitet und dann über die Blähdichtung 1 hinweg radial nach außen über den Rand 3a gezogen.

Zur Fixierung der Hülle 4 und der Blähdichtung 1 am Rand 3a des Anschlusses 3 der Entleerstation wird ein Spannring 5 angeordnet, der so über den oberen Rand 3a des Anschlusses 3 gesetzt wird, daß die beiden Randbereiche 4a und 4b der Hülle 4 sowie der radial außenliegende Abschnitt 1a der Blähdichtung 1 zwischen Spannring 5 und Rand 3a geklemmt und damit sicher befestigt sind.

An der Blähdichtung 1 ist ein Anschluß 6 für Druckluft vorgesehen, wobei in den Figuren der drucklose Zustand der Blähdichtung 1 mittels durchgezogener Linien dargestellt ist, während der druckbeaufschlagte Zustand (ohne Berücksichtigung der Form des Anschlusses 2) der Blähdichtung 1 durch gestrichelte Linien dargestellt ist.

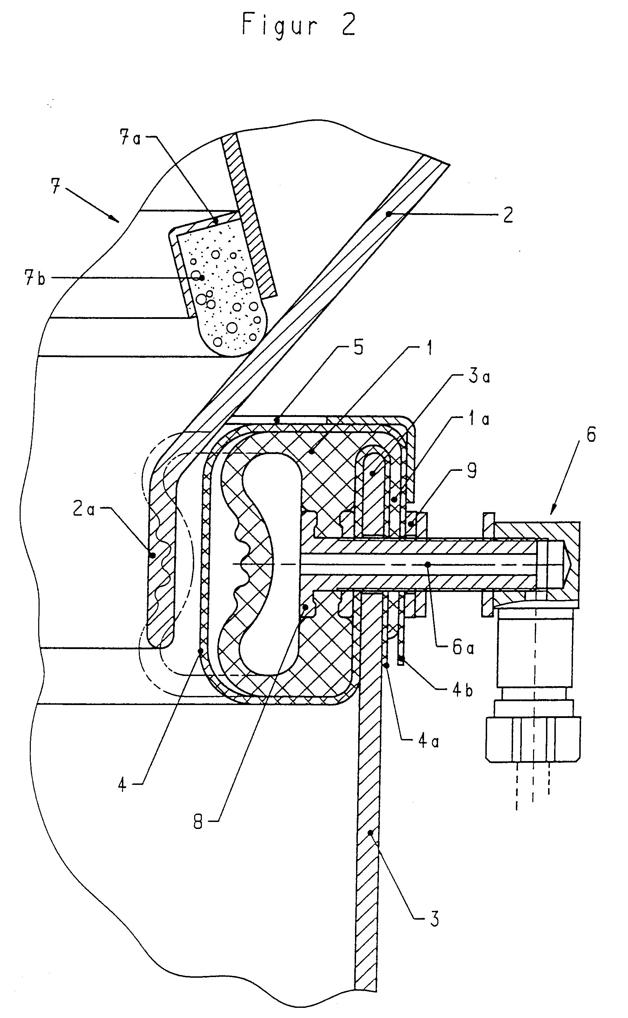

Der Druckluft-Anschluß 6 umfaßt im wesentlichen eine in der Figur 2 waagerecht verlaufende Zufuhrleitung 6a, die von außen nach innen zuerst den Randbereich 4b der Hülle 4, den Abschnitt 1a der Blähdichtung 1, den Randbereich 4a dar Hülle 4, den Rand 3a des Anschlusses 3 sowie die Blähdichtung 1 selbst durchdringt. Über diese Zufuhrleitung 6a wird die Druckluft in die Blähdichtung 1 eingeleitet, die sich dadurch ausdehnt und den Zwischenraum zwischen den Rändern 2a und 3a der Anschlüsse 2 und 3 vollständig und abdichtend ausfüllt.

Zur Befestigung der Zufuhrleitung 6a am Rand 3a des Anschlusses 3 ist der Außenumfang der Zufuhrleitung 6a mit einem Außengewinde versehen, auf welches eine Schraube 9 derart aufschraubbar ist, daß ein innerhalb der Blähdichtung 1 angeordneter Vorsprung 8 der Zufuhrleitung 6a als Widerlager dient und die Fixierung der Zufuhrleitung 6a am Rand 3a des Anschlusses 3 erlaubt.

Die Gestaltung der Blähdichtung 1 im Bereich zwischen den abzudichtenden Rändern 2a und 3a der Anschlüsse 2 und 3 ist weitgehend rechteckig. Auf der Seite der Blähdichtung 1, die durch die Einleitung der Druckluft aufgeweitet wird, ist die Blähdichtung geringfügig nach innen eingewölbt (siehe Figuren 1 und 2, links) und auf der Außenseite mit einer strukturierten Oberfläche eines abzudichtenden Randbereiches zu erreichen. In der gezeigten Ausführungsform ist die Außenform gewellt ausgebildet, d. h. dickere und dünnere Abschnitte sind alternierend angeordnet.

Im dargestellten Ausführungsbeispiel ist die Blähdichtung lediglich angenähert torusförmig ausgebildet, d. h. der aufblasbare Abschnitt besitzt keinen exakt kreisringförmigen Querschnitt, wie dies für die strenge Definition des Torus maßgeblich ist. Im vorliegenden Fall ist die exakte Ausbildung dieses Querschnitts zur Erzielung der Dichtwirkung jedoch unerheblich, so daß unter diesem Begriff ebenso der Kreisform angenäherte Geometrien verstanden werden sollen, wie beispielsweise quadratische, rechteckige oder auch D-förmige Querschnittsformen.

Ein hinsichtlich der Funktion übereinstimmender Blähdichtring läßt sich prinzipiell auch am radial innenliegenden Anschluß 2 realisieren, wobei dann das kreisringförmige Tuch zunächst mit seinem radial innenliegenden Abschnitt über den Rand 2a des Anschlusses 2 gelegt und der außenliegende Randbereich nach innen über die Blähdichtung zurückgeschlagen werden muß.

## Patentansprüche

1. Blähdichtring mit einer im wesentlichen torusförmigen Blähdichtung (1),
- die zwischen zwei abzudichtenden, konzentrisch positionierbaren Anschlüssen (2, 3) oder dergl. vorgesehen ist,
- die einen Befestigungsabschnitt (1a) aufweist, der über einen Rand (3a) eines der beiden Anschlüsse (3) gezogen ist, und
- die einen aufblasbaren Abschnitt (1b) besitzt, der radial wirkend zwischen beiden Anschlüssen (2, 3) angeordnet ist,
sowie mit einer Hülle (4), die die Blähdichtung (1) zumindest im Bereich des aufblasbaren Abschnitts (1b) im wesentlichen vollständig ummantelt.

2. Blähdichtring nach Anspruch 1, dadurch gekennzeichnet, daß die Hülle (4) aus reckfähigem Weich-PTFE besteht.

3. Blähdichtring nach Anspruch 1 oder 2, dadurch gekennzeichnet, daß die Hülle (4) aus einem kreisringförmigen Tuch gebildet ist.

4. Blähdichtring nach Anspruch 3, dadurch gekennzeichnet, daß das Tuch (4) mit einem außenliegenden Randbereich (4a) über den Rand (3a) aufgespannt ist, daß die Blähdichtung (1) darüberliegend auf den Rand (3a) aufgesetzt ist, und daß das Tuch mit einem ursprünglich innenliegenden Randbereich (4b) über die Blähdichtung (1) hinweg nach außen gezogen sowie über den Rand (3a) gespannt ist.

5. Blähdichtring nach einem der vorhergehenden Ansprüche 2 bis 4, dadurch gekennzeichnet, daß die Blähdichtung (1) und/oder die Hülle (4) am Rand (3a) des Anschlusses (3) mit einem Spannring (5) fixiert ist.

6. Blähdichtring nach einem der vorhergehenden Ansprüche, dadurch gekennzeichnet, daß die Blähdichtung (1) aus Silikon besteht.

7. Blähdichtring nach einem der vorhergehenden Ansprüche, dadurch gekennzeichnet, daß an der Blähdichtung (1) ein Anschluß (6) für Druckluft vorgesehen ist.

8. Blähdichtring nach Anspruch 6, dadurch gekennzeichnet, daß der Druckluft-Anschluß (6) in radialer Richtung in die Blähdichtung (1) geführt ist.

9. Verfahren zur Ausbildung eines Blähdichtrings nach einem der vorherigen Ansprüche, dadurch gekennzeichnet, daß die Hülle (4) als kreisringförmiges Tuch über den Rand (3a) des Anschlusses (3) gespannt wird, daß die Blähdichtung (1) über den Rand (3a) des Anschlusses (3) gelegt wird, und daß dann der ursprünglich innenliegende Randbereich (4b) der Hülle (4) nach außen, über die Blähdichtung (1) hinweg gezogen und über den Rand (3a) gespannt wird.

10. Verfahren nach Anspruch 9, dadurch gekennzeichnet, daß die Hülle (4) und die Blähdichtung (1) mit einem Spannring (5) fixiert werden, der am Rand (3a) befestigt wird.
